(19) Europäisches Patentamt
European Patent Office
Office européen des brevets

(11) **EP 1 969 320 B1**

(12) **EUROPÄISCHE PATENTSCHRIFT**

(45) Veröffentlichungstag und Bekanntmachung des Hinweises auf die Patenterteilung:
**20.02.2013 Patentblatt 2013/08**

(21) Anmeldenummer: **06841120.6**

(22) Anmeldetag: **22.12.2006**

(51) Int Cl.:
**G01D 5/20** *(2006.01)*    **G01D 5/22** *(2006.01)*

(86) Internationale Anmeldenummer:
**PCT/EP2006/012439**

(87) Internationale Veröffentlichungsnummer:
**WO 2007/079955 (19.07.2007 Gazette 2007/29)**

(54) **AUSWERTUNGS- UND KOMPENSATIONSSCHALTUNG FÜR EINEN INDUKTIVEN WEGSENSOR**

ANALYSIS AND COMPENSATION CIRCUIT FOR AN INDUCTIVE DISPLACEMENT SENSOR

CIRCUIT D'ÉVALUATION ET DE COMPENSATION D'UN CAPTEUR INDUCTIF DE DÉPLACEMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.12.2005 DE 102005062906**

(43) Veröffentlichungstag der Anmeldung:
**17.09.2008 Patentblatt 2008/38**

(73) Patentinhaber: **KNORR-BREMSE Systeme für Nutzfahrzeuge GmbH 80809 München (DE)**

(72) Erfinder:
• **FEUCHT, Thomas 71299 Wimsheim (DE)**
• **GSCHEIDLE, Wolfgang 71720 Oberstenfeld (DE)**

(74) Vertreter: **Mattusch, Gundula Knorr-Bremse AG, Patentabteilung V/RG Moosacher Strasse 80 80809 München (DE)**

(56) Entgegenhaltungen:
EP-A- 1 512 937    DE-A1- 10 141 764
DE-A1- 19 908 360    DE-B3- 10 348 343

EP 1 969 320 B1

**Beschreibung**

Die Erfindung betrifft eine Schaltungsanordnung zur Auswertung und Kompensation der Signale eines induktiven Wegsensors, wie er beispielsweise in Bremssystemen für Fahrzeuge Anwendung findet.

In solchen Bremssystemen sind häufig pneumatische Zylinder mit Kolben vorhanden, deren Kolbenstellung oder Kolbenposition über einen weiten Arbeitstemperaturbereich, in der Regel von -40 °C bis +150 °C, und unter allen Betriebszuständen, beispielsweise bei Vorhandensein von Ölnebel, berührungslos zu erfassen ist.Bei bekannten, diesen Zwecken dienenden Lösungen wird meist eine Tauchspule als Sensorspule verwendet, deren Spulenkörper in der Längsachse eine Bohrung besitzt, in welche ein metallischer Anker aus ferro- oder nicht ferromagnetischem Material eintaucht und dadurch die Induktivität der Tauchspule verändert. Diese Induktivitätsänderung kann mit einer elektronischen Auswertungsschaltung erfasst und in Form eines Frequenz- oder Analogsignals einem Mikrocontroller zur weiteren Auswertung zugeführt werden.Hierzu sind verschiedenartige Meßprinzipien bekannt, die in der Regel auf der Messung der Zeitkonstanten $\tau$ = L/R der Spule beruhen. Die Messung des Spulen-Innenwiderstands ist aufgrund der Niederohmigkeit der Tauchspule jedoch aufwändig. Erfolgt die Messung zudem als Gleichspannungsmessung, bestehen Nachteile dahin gehend, dass Anfälligkeiten gegen äußere magnetische Wechselfelder und Gleichspannungsverschiebungen innerhalb der verwendeten Schaltungsanordnung, beispielsweise durch eine Eingangsspannungsverschiebung eines Operationsverstärkers, bestehen, welche in einer ungenügenden Genauigkeit der Wegmessung resultieren.

Es muss bei der Messung des Spulen-Innenwiderstands der Tauchspule jedoch ein möglichst genaues elektrisches Signal geliefert werden, welches die momentane Kolbenstellung gut abbildet. Gleichzeitig muss das Ausgangssignal des induktiven Wegsensors bzw. der Tauchspule eine höchst mögliche Dynamik besitzen, um die Längsbewegung des Sensors bei Positionsänderungen mit hinreichender Empfindlichkeit erfassen zu können, und unempfindlich gegen die vorstehend erwähnten äußeren magnetischen Wechselfelder sein, wie sie beispielsweise von benachbarten Magnetventilen des Bremssystems oder sich in der Nähe befindenden Bahnlinien, Schrottplätzen oder Stahlinduktionsöfen erzeugt werden.

Die EP 1 512 937 B1 offenbart eine Vorrichtung zur Erfassung der Position eines ersten Fahrzeugteils in Bezug auf ein zweites Fahrzeugteil, mit einem induktiven Messsystem zum berührungslosen Bestimmen des Abstands zwischen dem ersten und zweiten Fahrzeugteil, das einen frei schwingenden Oszillator aufweist, der einen Schwingkreis mit einer Sensorinduktivität aufweist.

In der DE 101 41 764 A1 wird eine Vorrichtung zur Detektion der Position eines Objekts offenbart, mit zwei bestromten Spulen, um das Objekt zwischen den beiden Spulen zu bewegen.

Die DE 199 08 360 A1 offenbart einen Wirbelstromsensor mit einer über eine Wechselspannung vorgegebener Frequenz gespeisten Messspule und einer Auswerteschaltung, welche aufgrund der Impedanz der Messspule die Material- und Geometrieparameter eines Messobjekts bestimmt.

Die gattungsbildende DE 103 48 343 B3 offenbart eine Schaltungsanordnung zur induktiven Wegmessung mit einem Sensor, dessen Induktivität sich in Abhängigkeit von dem gemessenen Weg ändert. Die Schaltungsanordnung weist eine Oszillatorschaltung auf, mit der die Spule des Sensors alternierend in der einen und der anderen Richtung von Strom durchflossen wird. Der Sensor ist dabei zwischen zwei Operationsverstärker geschaltet, von denen der eine eine konstante Spannung an einem Anschluss des Sensors einregelt, während der andere abwechselnd zwischen zwei vorgegebenen Spannungen umgeschaltet wird.

Der Erfindung liegt die Aufgabe zugrunde, eine Schaltungsanordnung zur Auswertung und Kompensation von Signalen für einen induktiven Wegsensor zu schaffen, die gegenüber äußeren magnetischen Wechselfeldern unempfindlich ist und ein elektrisches Signal mit verbesserter Genauigkeit und hoher Dynamik liefert.

Erfindungsgemäß wird diese Aufgabe durch die Merkmale des Patentanspruchs 1 gelöst.

Somit wird die Aufgabe der Erfindung gelöst durch eine Schaltungsanordnung zur Auswertung und Kompensation der Signale eines induktiven Wegsensors, beinhaltend:

eine Spule mit einer Spuleninduktivität und einem Spulenwiderstand für eine Wegmessung;
einen ersten Operationsverstärker, dem an einem seiner Eingänge eine Referenzspannung zugeführt wird;
einen zweiten Operationsverstärker, dem an einem ersten seiner Eingänge das Ausgangssignal des ersten Operationsverstärkers und an einem zweiten seiner Eingänge ein rückgeführtes Signal zur Amplitudenregelung zugeführt wird; wobei
die eine Spule parallel zu dem Ausgang des zweiten Operationsverstärkers und dem ersten Eingang des zweiten Operationsverstärkers verschaltet ist und in Verbindung mit einer in Reihe zu der Spuleninduktivität und dem Spulenwiderstand liegenden Kapazität einen RLC-Reihenschwingkreis bildet.

Hierdurch wird eine Resonanzfrequenz des RLC-Reihenschwingkreises mit hoher Genauigkeit und guter Dynamik sowie Unempfindlichkeit gegenüber externen magnetischen Wechselfeldern erhalten.

Enthält diese Resonanzfrequenz noch Ungenauigkeiten, die nicht tolerierbar sind (wie beispielsweise Induktivitätsänderungen durch Änderungen der Permeabilität $\mu_r$ des Materials über der Temperatur im magnetischen Kreis), dann kann bevorzugt eine weitere Spule mit einer weiteren Spuleninduktivität und einem weiteren Spulenwiderstand für eine Temperatur- und/oder Störspannungskompensation vorgesehen werden, die an einem ersten der Enden ihrer Spulenwicklung mit einem zweiten Ende der Spulenwicklung der einen Spule verbunden ist und an einem zweiten der Enden ihrer Spulenwicklung mit dem zweiten Eingang des ersten Operationsverstärkers verbindbar ist, um die Genauigkeit der Resonanzfrequenz weiter zu erhöhen.

In einer bevorzugten Ausführungsform der Schaltungsanordnung ist die eine Spule eine Tauchspule mit einem Tauchanker, und der RLC-Reihenschwingkreis ist ein aktiver Schwingkreis, dessen Ausgangsfrequenz unabhängig von den Reihenwiderständen des Schwingkreises und proportional zu der Stellung des Tauchankers der einen Spule ist, und bei dem die Wegmessung über ein auf Wechselspannung basierendes Resonanzverfahren derart erfolgt, dass die Resonanzfrequenz der Wegmessung signifikant größer als eine von außen induzierte Störfrequenz ist. Hierdurch wird die Schaltungsanordnung vorteilhaft sehr stabil gegenüber externen Störungen.

Bevorzugt besteht ferner der Tauchanker aus einem ferromagnetischen oder nicht ferromagnetischen Material.

Besteht das Dielektrikum der Kapazität aus einem temperaturstabilen Material, und ist das temperaturstabile Material vorteilhaft z.B. eine C0G- oder NP0-Keramik, kann der Temperaturgang der Kapazität und damit der der Ausgangsfrequenz des Schwingkreises minimiert und stabilisiert werden.

Vorzugsweise sind bei der Schaltungsanordnung mit verbesserter Genauigkeit der Resonanzfrequenz ein erster Schalter zum Anlegen der ersten Referenzspannung an den ersten Eingang des ersten Operationsverstärkers, ein zweiter Schalter zum Anlegen der zweiten Referenzspannung an den ersten Eingang des ersten Operationsverstärkers, und ein dritter Schalter zum Einprägen einer dritten Referenzspannung und damit einer konstanten Differenzspannung über der einen Spule zwischen der Kapazität und dem Spulenwiderstand der einen Spule vorgesehen. Hierdurch kann auf einfache Art und Weise zwischen der Wegmessung und der zusätzlichen Temperaturkompensation umgeschaltet werden, da vorteilhaft die Schaltungsanordnung mit mittels der ersten bis dritten Schalter zwischen einer Wegmessung und einer Temperaturkompensation und/oder einer Kompensation magnetischer Störfelder der einen Spule umschaltbar ist.

Insbesondere bevorzugt sind zur Kompensation der Messspule die Spulenwicklungen der einen und der weiteren Spule eine Bifilarwicklung mit identischen Spuleninduktivitäten, identischen Spulenwiderständen und gegensinniger Verschaltung der beiden Spulenwicklungen, wodurch eine einfache Erfassung der Temperatur durch Auswertung des Tauchspulen-Innenwiderstands durch eine geeignete Schaltung über den Spulenstrom oder eine eingeprägte Spannung über der Spule möglich wird.

Als Ausgangssignale werden somit an einem ersten Ausgang ein digitales Frequenz- oder Wegsignal, das proportional zu der Eintauchtiefe des Tauchankers der einen Spule ist, und/oder an einem zweiten Ausgang ein analoges Temperatursignal erzeugt, das proportional zu der Temperatur der Tauchspule ist, wobei dies durch einen ersten Schaltungsteil für die Wegmessung, der das digitale Frequenz- oder Wegsignal an dem ersten Ausgang erzeugt, und durch einen zweiten Schaltungsteil für die Widerstandsmessung, der das analoge Temperatursignal an dem zweiten Ausgang erzeugt, in Abhängigkeit geforderter Eigenschaften und Genauigkeiten vorteilhaft durch voneinander getrennte Schaltungsteile oder alternativ durch kombinierte Schaltungsteile erfolgen kann.

Der Erfindung liegt somit der Gedanke zugrunde, einen ersten Schaltungsteil für die Weg- bzw. Frequenzmessung vorzusehen, bei dem zur Messung und Erzeugung eines geeigneten Ausgangssignals eine in einem RLC-Reihenschwingkreis wirkende Messspule zur Anwendung kommt. Zusätzlich kann bevorzugt ein zweiter Schaltungsteil eingesetzt werden, welcher mittels einer Widerstandsmessung eine Temperaturkompensation und eine Kompensation von durch äußere magnetische Störfelder induzierten Ungenauigkeiten der Temperaturkompensation der Messspule und damit eine nochmals verbesserte Genauigkeit der Messung ermöglicht. Beide der vorgenannten Schaltungsteile sind weitgehend unempfindlich gegenüber Temperaturschwankungen und Einkopplungen externer Magnetfelder, wodurch insbesondere die Empfindlichkeit der Schaltung gegenüber magnetischen Störfeldern verringert wird.

Die Erfindung wird nachstehend anhand bevorzugter Ausführungsbeispiele unter Bezugnahme auf die Zeichnung näher beschrieben. Es zeigen:

Fig. 1 eine Schaltungsanordnung des Prinzips einer Wegmessung einer Sensorspule durch Frequenzmessung und ohne kompensatorische Erfassung der Spulentemperatur und magnetischer Störfelder; und

Fig. 2 eine Schaltungsanordnung des Prinzips einer Wegmessung einer Sensorspule durch Frequenzmessung mit einer Kompensationsspule zur Temperaturkompensation und Kompensation magnetischer Störfelder in der Sensorspule.

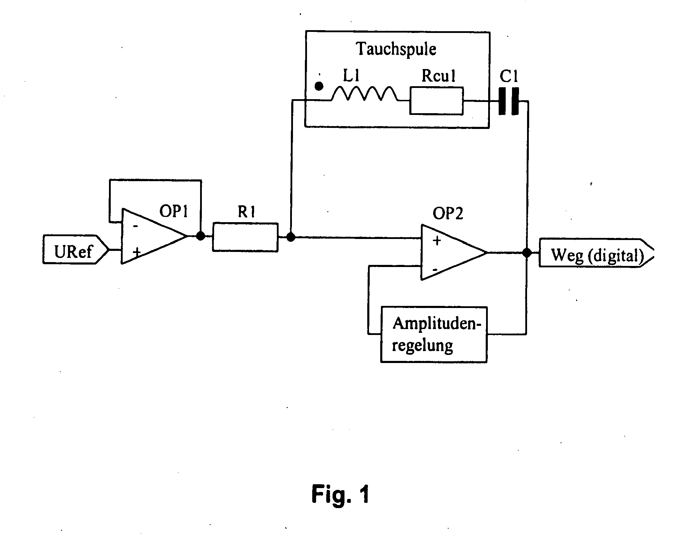

Im Einzelnen zeigt Fig. 1 in einer Prinzipschaltung der bevorzugten Wegsensorik zur Wegmessung ohne kompensatorische Erfassung der Temperatur oder magnetischer Störfelder der Tauch- bzw. Sensorspule einen ersten Operationsverstärker OP1, der mit Rückführung seines Ausgangssignals an einen ersten seiner Eingänge (-) als invertierender Verstärker ausgebildet ist, dem an einem zweiten Eingang (+) eine Referenzspannung Uref zugeführt wird, und dessen Ausgang mit einem Widerstand R1 verschaltet ist.

Die Ausgangsspannung des Widerstands R1 wird einem ersten Eingang (+) eines zweiten Operationsverstärkers OP2 zugeführt, dessen Ausgangssignal über eine geeignete Beschaltung zur Amplitudenregelung an einen zweiten seiner Eingänge (-) zurückgeführt wird. Die Amplitudenregelung stellt dabei sicher, dass der Schwingkreis in jedem Betriebszustand sicher anschwingt und die Schwingfrequenz stabil bleibt.

Ferner ist parallel zu dem Operationsverstärker OP2 die zur Wegmessung verwendete Sensorspule, die mit einer Spuleninduktivität L1 und einem Spulenwiderstand Rcu1 und einer externen Kapazität C1 einen RLC-Reihenschwingkreis bildet, so verschaltet, dass das Ausgangssignal des zweiten Operationsverstärkers OP2 ebenfalls an dessen ersten Eingang (+) zurückgeführt wird.

Das Ausgangssignal des zweiten Operationsverstärkers OP2 wird schließlich aus der Schaltungsanordnung ausgeleitet und steht dort als digitales Wegsignal der Sensorspule zur weiteren Verarbeitung zur Verfügung.

Fig. 1 zeigt somit eine Schaltungsanordnung, welche im Prinzip aus einem (ersten) Schaltungsteil für die Wegmessung durch Frequenzmessung besteht.

Bei dieser Wegmessung kommt ein auf Wechselspannungstechnik basierendes Resonanzverfahren zur Anwendung, wobei entgegen bekannten Schaltungsprinzipien bevorzugt ein aktiver RLC-Reihenschwingkreis Anwendung findet, dessen Ausgangsfrequenz unabhängig von den Reihenwiderständen des Schwingkreises und proportional zu der Stellung des Tauchankers in der Spule ist.

Die Resonanzfrequenz des RLC-Reihenschwingkreises ergibt sich hierbei aus der Gleichung

$$f_{res} = \frac{1}{2\pi} \sqrt{LC}$$

Durch das Resonanzprinzip mit fres >> fstör, d.h. einer Resonanzfrequenz fres, die sehr viel größer ist als eine Störfrequenz fstör, ist die in Fig. 1 gezeigte Schaltungsanordnung sehr stabil gegenüber externen Störungen. Außerdem kann der Temperaturgang der Kapazität C1, d.h. die Temperaturabhängigkeit der Kapazität C1 aufgrund der Temperaturabhängigkeit des Dielektrikums, durch eine entsprechende Wahl des Kondensatormaterials, beispielsweise mit C0G- oder NP0-Keramik als Dielektrikum, minimiert und stabilisiert werden.

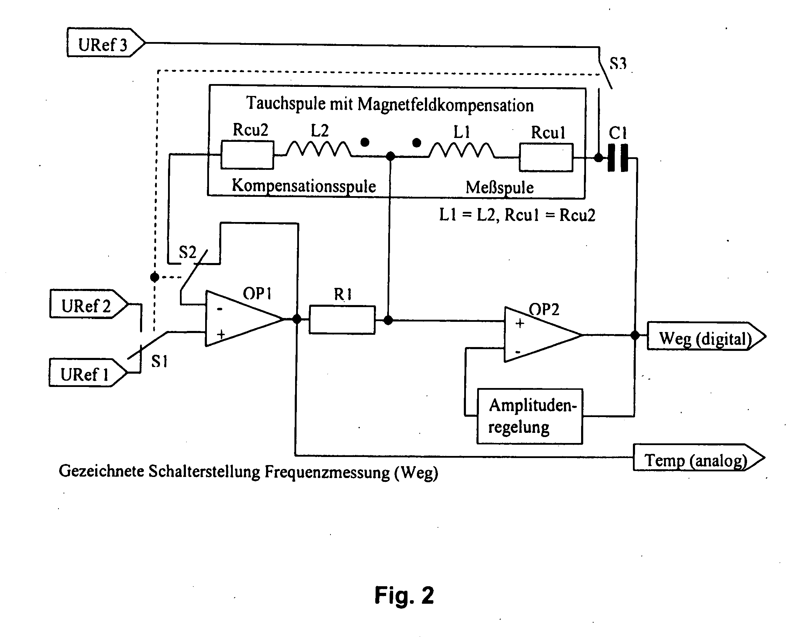

Fig. 2 zeigt eine Schaltungsanordnung des Prinzips einer Wegmessung durch Frequenzmessung mit einer Kompensationsspule zur Temperaturkompensation und Kompensation magnetischer Störfelder in der Tauchspule.

Es wird angemerkt, dass die Schaltungsanordnung gemäß Fig. 1 auch in Fig. 2 vorhanden ist, so dass den Elementen der Fig. 1 entsprechende Elemente nicht nochmals beschrieben werden, Ferner zeigt Fig. 2 zusätzlich zu dem ersten Schaltungsteil der Fig. 1 einen weiteren (zweiten) Schaltungsteil für die kompensatorische Widerstandsmessung der Tauchspule.

Im Einzelnen umfasst dieser zweite Schaltungsteil einen ersten Schalter S1 an einem Eingang (+) des Operationsverstärkers OP1, mittels welchem eine erste oder eine zweite Referenzspannung Uref1, Uref2 an diesen Eingang anlegbar sind, einen zweiten Schalter S2 an dem anderen Eingang (-) des Operationsverstärkers OP1, mittels welchem an diesem Eingang das bereits aus der Fig. 1 bekannte Signal oder ein weiteres, noch zu beschreibendes Signal anlegbar sind, und einen dritten Schalter S3, mittels welchem eine dritte Referenzspannung Uref3 an einem Knoten zwischen der Kapazität C1 und dem Spulenwiderstand Rcu1 der Tauchspule über der Spule einprägbar ist.

Die Schalter S1 bis S3 dienen dazu, die Schaltungsanordnung der Fig. 2 zwischen der in Fig. 1 bekannten Wegmessung ohne Widerstandsmessung und der zusätzlichen Temperaturkompensation der Tauchspule sowie zur Kompensation magnetischer Störfelder umzuschalten. Die in Fig. 2 gezeigte Stellung der Schalter S1 bis S3 zeigen die Schalterstellung dieser Schalter für die in Fig. 1 gezeigte Weg- bzw. Frequenzmessung.

Das Ausgangssignal des Operationsverstärkers OP1 stellt gemäß Fig. 2 einen Temperatursignal-Ausgang dar, wenn sich die Schalter S1 bis S3 in ihrer Stellung für die Temperaturkompensation und die Kompensation magnetischer Störfelder befinden, und steht dort als analoges Temperatursignal für die weitere Verarbeitung zur Verfügung.

Wie in Fig. 2 weiter gezeigt ist, umfasst die Tauchspule zusätzlich zu der in Fig. 1 gezeigten Spulenwicklung (Meßspule) eine weitere Spulenwicklung (Kompensationsspule) mit einer Spuleninduktivität L2 und einem Spulenwiderstand Rcu2, die wie nachstehend beschrieben als Bifilarwicklung ausgeführt ist, und die in der Schalterstellung des Schalters S2 für die Kompensation mit einem ihrer Enden an den anderen Eingang (-) des Operationsverstärkers OP1 geführt ist, während das andere ihrer Enden mit einem Ende der Wicklung der Meßspule verbunden ist und somit mit dem Ausgang des Operationsverstärkers OP1 verschaltet ist.

Bezugnehmend auf die Funktion der Widerstandsmessung zur Temperaturkompensation der Tauchspule wird die Genauigkeit der Resonanzfrequenz fres durch das Material des Tauchankers, beispielsweise Aluminium oder Stahl, und die daraus resultierende Temperaturabhängigkeit der Spuleninduktivität L1 aufgrund des Tauchankermaterials mit seiner relativen Permeabilität $\mu_r$ beeinflusst. Ist diese Beeinflussung, welche eine in der Regel kleine Ungenauigkeit darstellt, nicht tolerierbar, wird durch eine Ermittlung der genauen Temperatur der Tauchspule bzw. des Tauchankers eine Kompensation durchgeführt, durch welche die Genauigkeit der Schaltungsanordnung insgesamt weiter erhöht wird.

Hierzu wird die Temperatur bevorzugt durch eine Auswertung des Innenwiderstands R der Tauchspule dadurch erfasst, dass der Innenwiderstand R mittels einer geeigneten Schaltungsanordnung über den Spulenstrom oder eine über der Spule eingeprägte Spannung ermittelt wird. Da eine solche Messung eine Gleichspannungsmessung ist und die Tauchspule auf magnetische Felder in ihrer Nähe reagiert, kann diese Messung durch ein nahes magnetisches Wechselfeld und dessen Einwirkung auf die Tauchspule stark gestört werden. Daher wird zur Kompensation der in die Tauchspule induzierten Ströme bevorzugt eine Bifilarwicklung, d.h. zwei exakt gleiche Spulenwicklungen (L1 = L2, Rcu1 = Rcu2), der Sensorspule verwendet, welche durch eine gegensinnige Verschaltung der beiden Einzelwicklungen und den Verstärker OP1 im Rückkoppelpfad die Kompensation des magnetischen Wechselfeldes in der Tauchspule bewirkt.

Es wird angemerkt, dass zur reinen Temperaturkompensation der Tauchspule die Kompensationswicklung Rcu2/L2 nicht benötigt werden würde, denn hierzu wäre es ausreichend, den mittleren Verbindungspunkt der beiden Spulen direkt auf den Minus-Eingang des Operationsverstärkers OP1 zu führen.

Die Kompensationsspule Rcu2/L2 ist jedoch zur Kompensation eines magnetischen Störfelds erforderlich, weil sie in Verbindung mit dem Rückkoppelpfad des Operationsverstärkers OP1 die durch das magnetische Störfeld in der Tauchspule L1 induzierten Wechselströme (gegen)kompensiert. Dadurch werden die Wechselsignal-Anteile in den beiden Spulen eliminiert und als Störquelle für die Gleichsignal- bzw. DC-Messung des ohmschen Innenwiderstandes der Tauchspule beseitigt.

Im Einzelnen wird im Kompensationsfall zwischen dem Schalter S3 und dem Schalter S2 eine (nicht gezeigte) definierte Differenzspannung Udiff über der Tauchspule Rcu1/L1 eingeprägt, so dass ein definierter Meßstrom durch die Tauchspule fließt. Dieser Meßstrom fließt durch den (Meß-)Widerstand R1 in den Ausgangspin des Operationsverstärkers OP1 ab, der seinerseits durch den Rückkoppelzweig über den Spuleninnenwiderstand Rcu2 und die Spuleninduktivität L2 die vorstehend erwähnte Differenzspannung Udiff über der Tauchspule ausregelt und konstant hält. Durch diese Regelung wird der durch die Tauchspule eingeprägte Meßstrom über R1 in eine (nicht gezeigte) definierte Spannung Utemp umgewandelt, die sodann als Meßgröße herangezogen wird.

Steht nun während dieser Gleichspannungsmessung, beispielsweise durch ein externes magnetisches Wechselfeld, eine Wechselstörspannung in der Sensorspule, würde diese Wechselsignal- bzw. AC-Spannung die gesamte Messung verfälschen und das Meßergebnis unbrauchbar machen. In diesem Fall wird die zweite Kompensationswicklung Rcu2/L2 wirksam. In dieser zweiten Wicklung wird durch das transformatorische Prinzip eine weitere Wechselspannung bzw. ein Wechselstrom erzeugt, der durch die Verschaltung der beiden Wicklungen zusammen mit dem Operationsverstärker OP1 der ursächlichen Störspannung entgegenwirkt und um genau 180° phasenverschoben in die Tauchspule eingespeist wird. Dadurch heben sich die Wechselsignal-Anteile in beiden Spulen derart auf, dass die Störung beseitigt wird.

Es wird angemerkt, dass die beiden vorstehend beschriebenen Messverfahren bzw. der erste und der zweite Schaltungsteil aufgrund der Umschaltbarkeit mittels den Schaltern S1 bis S3 abhängig von Genauigkeitsanforderungen oder einer geforderten Störunempfindlichkeit gegenüber magnetischen Wechselfeldern sowohl voneinander getrennt als auch in Kombination miteinander vorgesehen sein können. Ein bevorzugtes Beispiel einer solchen Kombination ist in Fig. 2 dargestellt.

Als wesentliche Vorteile der bevorzugten Ausführungsbeispiele der vorgeschlagenen Schaltungsanordnung sind somit eine hohe Genauigkeit und Dynamik der Wegmessung, eine gute Temperaturstabilität, eine verbesserte Störfestigkeit gegenüber magnetischen Störfeldern und eine Kompensierbarkeit des Temperaturgangs der Wegmessung und dadurch eine weiter verbesserte Erhöhung der Genauigkeit der Messung zu nennen.

Bezugszeichenliste

| | |
|---|---|
| Uref1, Uref2, Uref 3 | Amplitudenregelung Referenzspannungen |
| OP1, OP2 | Operationsverstärker |
| R1 | Widerstand |
| C1 | Kondensator |
| L1 | Spuleninduktivität der Meßspule |
| Rcu1 | Spulenwiderstand der Meßspule |
| L2 | Spuleninduktivität der Kompensationsspule |
| Rcu2 | Spulenwiderstand der Kompensationsspule |
| S1, S2, S3 | Schalter |

**Patentansprüche**

1. Schaltungsanordnung zur Auswertung und Kompensation der Signale eines induktiven Wegsensors, beinhaltend:

   eine Spule mit einer Spuleninduktivität (L1) und einem Spulenwiderstand (Rcu1) für eine Wegmessung,
   einen ersten Operationsverstärker (OP1), dem an einem seiner Eingänge eine Referenzspannung (Uref) zugeführt wird;
   einen zweiten Operationsverstärker (OP2), dem an einem ersten seiner Eingänge das Ausgangssignal des ersten Operationsverstärkers (OP1) und an einem zweiten seiner Eingänge ein rückgeführtes Signal zur Amplitudenregelung zugeführt wird; **dadurch gekennzeichnet, dass**
   die eine Spule parallel zu dem Ausgang des zweiten Operationsverstärkers (OP2) und dem ersten Eingang des zweiten Operationsverstärkers (OP2) verschaltet ist und in Verbindung mit einer in Reihe zu der Spuleninduktivität (L1) und dem Spulenwiderstand (Rcu1) liegenden Kapazität (C1) einen RLC-Reihenschwingkreis bildet.

2. Schaltungsanordnun nach Anspruch 1, **dadurch gekennzeichnet, dass** eine weitere Spule mit einer weiteren Spuleninduktivität (L2) und einem weiteren Spulenwiderstand (Rcu2) für eine Temperatur- und/oder Störspannungskompensation vorgesehen ist, die an einem ersten der Enden ihrer Spulenwicklung mit einem zweiten Ende der Spulenwicklung der einen Spule verbunden ist und an einem zweiten der Enden ihrer Spulenwicklung mit dem zweiten Eingang des ersten Operationsverstärkers (OP1) verbindbar ist.

3. Schaltungsanordnung nach Anspruch 1 oder 2, **dadurch gekennzeichnet, dass** die eine Spule eine Tauchspule mit einem Tauchanker ist, und der RLC-Reihenschwingkreis ein aktiver Schwingkreis ist, dessen Ausgangsfrequenz unabhängig von den Reihenwiderständen des Schwingkreises und proportional zu der Stellung des Tauchankers der einen Spule ist, und bei dem die Wegmessung über ein auf Wechselspannung basierendes Resonanzverfahren derart erfolgt, dass die Resonanzfrequenz der Wegmessung signifikant größer als eine von außen induzierte Störfrequenz ist.

4. Schaltungsanordnung nach Anspruch 3, **dadurch gekennzeichnet, dass** der Tauchanker aus einem ferromagnetischen oder nicht ferromagnetischen Material besteht.

5. Schaltungsanordnung nach einem der vorangehenden Ansprüche, **dadurch gekennzeichnet, dass** das Dielektrikum der Kapazität (C1) aus einem temperaturstabilen Material besteht.

6. Schaltungsanordnung nach Anspruch 5, **dadurch gekennzeichnet, dass** das temperaturstabile Material eine C0G- oder NPO-Keramik ist.

7. Schaltungsanordnung nach einem der Ansprüche 2 bis 6, **gekennzeichnet durch** einen ersten Schalter (S1) zum Anlegen der ersten Referenzspannung (Uref1) an den ersten Eingang des ersten Operationsverstärkers (OP1), einen zweiten Schalter (S2) zum Anlegen der zweiten Referenzspannung (Uref2) an den ersten Eingang des ersten Operationsverstärkers (OP1), und einen dritten Schalter (S3) zum Einprägen einer dritten Referenzspannung (Uref3) und damit einer konstanten Differenzspannung über der einen Spule zwischen der Kapazität (C1) und dem Spulenwiderstand (Rcu1) der einen Spule.

8. Schaltungsanordnung nach Anspruch 7, **dadurch gekennzeichnet, dass** die Schaltungsanordnung mittels der ersten bis dritten Schalter (S1 bis S3) zwischen einer Wegmessung und einer Temperaturkompensation und/oder einer Kompensation magnetischer Störfelder der einen Spule umschaltbar ist.

9. Schaltungsanordnung nach einem der Ansprüche 2 bis 8, **dadurch gekennzeichnet, dass** die Spulenwicklungen der einen und der weiteren Spule eine Bifilarwicklung mit identischen Spuleninduktivitäten (L1, L2), identischen Spulenwiderständen (Rcu1, Rcu2) und gegensinniger Verschaltung der beiden Spulenwicklungen bilden.

10. Schaltungsanordnung nach einem der vorangehenden Ansprüche 3 bis 9, **dadurch gekennzeichnet, dass** die Schaltungsanordnung an einem ihrer Ausgänge ein digitales Frequenz- oder Wegsignal erzeugt, das proportional zu der Eintauchtiefe des Tauchankers der einen Spule ist.

11. Schaltungsanordnung nach einem der Ansprüche 3 bis 9, **dadurch gekennzeichnet, dass** die Schaltungsanordnung an einem ersten ihrer Ausgänge ein digitales Frequenz- oder Wegsignal, das proportional zu der Eintauchtiefe des Tauchankers der einen Spule ist, und an einem zweiten ihrer Ausgänge ein analoges Temperatursignal erzeugt, das proportional zu der Temperatur der Tauchspule ist.

12. Schaltungsanordnung nach Anspruch 11, **dadurch gekennzeichnet, dass** ein erster Schaltungsteil für eine Wegmessung das digitale Frequenz- oder Wegsignal an dem ersten Ausgang und ein zweiter Schaltungsteil für eine Widerstandsmessung das analoge Temperatursignal an dem zweiten Ausgang getrennt voneinander oder in Kombination erzeugen.

**Claims**

1. Circuit array for analyzing and compensating the signals of an inductive displacement sensor, comprising:

   - a coil having a coil inductance (L1) and a coil resistance (Rcu1) for displacement measurement,
   - a first operational amplifier (OP1) that is supplied with a reference voltage (Uref) on one of its inputs;
   - a second operational amplifier (OP2) that is supplied with the output signal of said first operational amplifier (OP1) on a first one of its inputs and with a returned signal for amplitude regulation on a second one of its inputs; **characterized in that**

   said one coil is connected in parallel with the output of said second operational amplifier (OP2) and the first input of said second operational amplifier (OP2) and is combined with a capacitor (C1) connected in series with said coil inductance (L1) and the coil resistance (Rcu1) so as to constitute an RLC series-connected resonant oscillating circuit.

2. Circuit array according to Claim 1, **characterised in that** a further coil with a further coil inductance (L2) and a further coil resistance (Rcu2) is provided for temperature and/or interference voltage compensation, which is connected on a first one of the ends of its coil windings to a second end of the coil winding of said one coil and is adapted for connection to the second input of said first operational amplifier on its second one of the ends of its coil winding.

3. Circuit array according to Claim 1 or 2, **characterised in that** said one coil is a plunger coil comprising a solenoid plunger, and that said RLC series-connected resonant oscillating circuit is an active oscillating circuit whose output frequency is independent of the series resistors of said oscillating circuit and proportional to the position of said solenoid plunger of said one coil, and wherein the displacement measurement takes place via a resonance process based on alternating voltage, in such a way that the resonance frequency of the displacement measurement is significantly higher than an interference frequency induced from the outside.

4. Circuit array according to Claim 3, **characterised in that** said solenoid plunger consists of a ferromagnetic or a non-ferromagnetic material.

5. Circuit array according to any of the preceding Claims, **characterised in that** the dielectric of said capacitance (C1) consists of a temperature-stable material.

6. Circuit array according to Claim 5, **characterised in that** said temperature-stable material is a COG-type or NPO-type ceramic.

7. Circuit array according to any of the Claims 2 to 6, **characterised by** a first switch (S1) for applying said first reference voltage (Uref1) to said first input of said first operational amplifier (OP1), a second switch (S2) for applying said second reference voltage (Uref2) to said first input of said first operational amplifier (OP1), and a third switch (S3) for applying a third reference voltage (Uref3) and hence a constant differential voltage through said one coil between said capacitance (C1) and the coil resistance (Rcu1) of said one coil.

8. Circuit array according to Claim 7, **characterised in that** the circuit array is adapted to be switched over by means of said first to third switches (S1 to S3) between a displacement measuring mode and a temperature compensation mode and/or a mode of compensation of magnetic interference field of said one coil.

9. Circuit array according to any of the Claims 2 to 8, **characterised in that** the coil windings of said one coil and said further coil constitute a bifilar winding having identical coil inductances (L1, L2), identical coil resistances (Rcu1, Rcu2) and an opposite interconnection of said two coil windings.

**10.** Circuit array according to any of the preceding Claims 3 to 9, **characterised in that** the circuit array generates a digital frequency or displacement signal on one of its outputs, which is proportional to the depth of immersion of the solenoid plunger of said one coil.

**11.** Circuit array according to any of the Claims 3 to 9, **characterised in that** the circuit array generates, on a first one of its outputs, a digital frequency or displacement signal that is proportional to the depth of immersion of said solenoid plunger of said one coil, and, on a second one of its outputs, an analog temperature signal that is proportional to the temperature of said solenoid plunger.

**12.** Circuit array according to Claim 11, **characterised in that** a first circuit part generates said digital frequency or displacement signal on a first output for displacement measurement and that a second circuit part generates said analog temperature signal for resistance measurement on said second output, either separately or in combination.

**Revendications**

**1.** Structure de circuit pour l'analyse et la compensation de signaux d'un capteur inductif de déplacement, comprenant:

- une bobine ayant une inductance de bobine (L1) et une résistance de bobine (Rcu1) pour la mesure de déplacement,
- un premier amplificateur opérationnel (OP1), qui est alimenté en une tension de référence (Uref) à une de ses entrées ;
- un deuxième amplificateur opérationnel (OP2), qui est alimenté en le signal de sortie dudit premier amplificateur opérationnel (OP1) à une première de ses entrées et en un signal retourné pour le réglage de l'amplitude à une deuxième de ses entrées ; **caractérisée en ce que**

ladite seule bobine est connectée en parallèle à la sortie dudit deuxième amplificateur opérationnel (OP2) et à la première entrée dudit deuxième amplificateur opérationnel (OP2), en étant combinée avec un condensateur (C1) relié en série relativement à ladite inductance de bobine (L1) et à la résistance de bobine (Rcu1) d'une manière, qu'un circuit oscillant résonnant RLC en série soit constitué.

**2.** Structure de circuit selon la revendication 1, **caractérisée en ce qu'**une autre bobine à une inductance de bobine additionnelle (L2) et à une résistance bobine additionnelle (Rcu2) est pourvue pour la compensation de température et/ou de la tension parasite, qui est reliée, à une première extrémité des extrémités de ses bobinages, à une deuxième extrémité du bobinage de ladite seule bobine, en étant apte à la connexion à la deuxième entrée dudit premier amplificateur opérationnel de la deuxième extrémité de son bobinage.

**3.** Structure de circuit selon la revendication 1 or 2, **caractérisée en ce que** ladite seule bobine est une bobine de solénoïde comprenant un poussoir de solénoïde, et **en ce que** ledit circuit oscillant résonnant RLC en série est un circuit oscillant actif, dont la fréquence de sortie est indépendante des résistances en série dudit circuit oscillant et proportionnelle à la position dudit poussoir de solénoïde de ladite seule bobine, et dans laquelle la mesure de déplacement se fait via un processus de résonance sur la base d'une tension alternative, d'une telle manière, que la fréquence de résonance de la mesure de déplacement soit nettement plus haute qu'une fréquence de brouillage induite de l'extérieur.

**4.** Structure de circuit selon la revendication 3, **caractérisée en ce que** ledit poussoir de solénoïde consiste en un matériau ferromagnétique ou non-ferromagnétique.

**5.** Structure de circuit selon une quelconque des revendications précédentes, **caractérisée en ce que** le diélectrique dudit condensateur (C1) consiste en un matériau stable en toute température.

**6.** Structure de circuit selon la revendication 5, **caractérisée en ce que** ledit matériau stable en toute température est un matériau céramique du type COG ou NPO.

**7.** Structure de circuit selon une quelconque des revendications 2 à 6, **caractérisée par** un premier commutateur (S1) pour l'application de ladite première tension de référence (Uref1) à ladite première entrée dudit premier amplificateur opérationnel (OP1), un deuxième commutateur (S2) pour l'application de ladite deuxième tension de référence (Uref2) à ladite première entrée dudit premier amplificateur opérationnel (OP1), et un troisième commutateur (S3) pour l'application d'une troisième tension de référence (Uref3) et donc une tension différentielle constante à travers ladite seule bobine entre ledit condensateur (C1) et la résistance de bobine (Rcu1) de ladite seule bobine.

8. Structure de circuit selon la revendication 7, **caractérisée en ce que** the structure de circuit set apte à être commutée moyennant lesdits premier à troisième commutateurs (S1 à S3) entre un mode de mesure de déplacement et un mode de compensation de température et/ou un mode de compensation du champ magnétique de brouillage de ladite seule bobine.

9. Structure de circuit selon une quelconque des revendications 2 à 8, **caractérisée en ce que** les bobinages de ladite seule bobine et de ladite autre bobine constituent un bobinage bifilaire aux inductances identiques de bobine (L1, L2), des résistances identiques de bobine (Rcu1, Rcu2) et une interconnexion opposée desdits deux bobinages.

10. Structure de circuit selon une quelconque des revendications précédentes 3 à 9, **caractérisée en ce que** la structure de circuit engendre un signal de fréquence numérique ou un signal de déplacement à une de ses sorties, qui est proportionnel à la profondeur d'insertion du poussoir de solénoïde de ladite seule bobine.

11. Structure de circuit selon une quelconque des revendications 3 to 9, **caractérisée en ce que** la structure de circuit engendre, à une première sortie de ses sorties, un signal de fréquence numérique ou un signal de déplacement, qui est proportionnel à la profondeur d'insertion dudit poussoir de solénoïde de ladite seule bobine, et, à une deuxième sortie de ses sorties, un signal de température analogue, qui est proportionnel à la température dudit poussoir de solénoïde.

12. Structure de circuit selon la revendication 11, **caractérisée en ce qu'**une première partie de circuit engendre ledit signal de fréquence numérique ou signal de déplacement à une première sortie pour la mesure de déplacement et qu'une deuxième partie de circuit engendre ledit signal de température analogue pour la mesure de résistance à ladite deuxième sortie, soit séparément, soit en combinaison.

**Fig. 1**

EP 1 969 320 B1

Fig. 2

**IN DER BESCHREIBUNG AUFGEFÜHRTE DOKUMENTE**

**In der Beschreibung aufgeführte Patentdokumente**

- EP 1512937 B1
- DE 10141764 A1
- DE 19908360 A1
- DE 10348343 B3